# EUROPEAN PATENT APPLICATION

(11) **EP 3 095 765 A1**
(43) Date of publication of application: **23.11.2016**
(21) Application number: 15020076.4
(22) Date of filing: 19.05.2015
(51) Int. Cl.: C03C 1/00, C03C 1/02, C03B 1/02

(54) **GLASS BATCH PELLETIZING METHOD USING ACTIVATED CULLET**

(71) Applicant: Klisch sp. z o.o., 31-306 Krakow (PL)
(72) Inventor: Klisch, Marian, 38-400 Krosno (PL); Klisch, Michal, 31-306 Kraków (PL); Kadow, Grazyna, 64-920 Pila (PL); Lenartowicz, Jacek, 64-917 Skórka (PL)

(57) **Abstract**

The subject of the invention is glass batch pelletizing method using activated cullet. The method comprises in: addition of 1) binding agent obtained in two step geopolimerization, where the first step consists in partial dissolution of amorphous or partly amorphous aluminosilicate precursor in the form of glass cullet or slag or fly ash or their mixture in solution of hydrated silicate of sodium and/or potassium in a manner that guarantees increase of reaction's surface and/or increase of reaction's temperature and/or removal of reaction's product layer from a surface of precursor's grains that is in conditions of alkaline activation boosted mechanically or thermally, and where the second step consists in forced substitution of the part of [SiOₙ(OH)₍₄₋ₙ₎]ⁿ⁻ groups in calcium and/or magnesium and sodium and/or potassium silicate's and aluminosilicate's monomers and oligomers by [AlOₙ(OH)₍₄₋ₙ₎]⁽ⁿ⁺¹⁾⁻ ···(n+1)Na⁺ groups from sodium aluminate and next proceeding polycondensation of formed as a product of precursor with water glass and sodium aluminate monomers and oligomers of hydrated alumininosilicates of calcium and/or magnesium and sodium and/or potassium, to 2) premixed composition of whole batch components, next 3) mixing with prepared binding agent, and 4) pelletizing operation undertaken without delay performed in pelletizing device, preferably drum or centrifugal, where batch is transferred into pellets without additional water spraying or introducing any extra binding agent.

## Description

The subject of the invention is a method of glass batch pelletizing with the use of activated cullet.

The method is suitable for pelletizing of batches applicable to melting of soda-lime container, float, lighting, and tableware glasses, as well as to borosilicate C-type for glass wool and E-type for continuous glass fibre production.

There are many articles and patents known which solve the problem of glass batch granulation, pelletizing or compacting. Most of them are based on utilizing the water solutions of sodium and/or potassium silicates, so-called water glasses, as a binder enhancing intergranular adhesion forces. In other proposed solutions, a small amount of binder is produced as a result of sodium and/or potassium hydroxide with sand and or/cullet and/or feldspar proceeding during batch mixing.

According to P. Bertuzzi, P. Ercole, P. Ferrero, L. Ramona: Glassy sand from cullet rejected during primary processing: quality energy and environmental analysis. Glass machinery and accessories no 2, 2009, 66-73***,*** during recycled glass cullet processing, about 20% of total volume is too fine and, quite often, too contaminated to be reused in glass melting, and consequently disposed as landfill.

The article of E. Alvarez Ayuso i H. Nygteren: Reduction of alkaline waste streams from anodising industry by production of dawsonite describes a mechanism of waste sodium aluminate formation during aluminium etching in mixed solution of sodium hydroxide and sodium aluminate as a first step of aluminium anodisation process. As a solution being continuously saturated in aluminium it becomes waste, unfit for subsequent use. Effluents from aluminium etching process typically contain: 132 g/l of Al and 151 g/l of Na on average. Effluents from first rinse contain: 67 g/l of Al and 71 g/l of Na on average. Main components of both effluents are sodium aluminate NaAl(OH)₄ and sodium hydroxide NaOH occurring in excess. Due to technological reasons, the effluents from aluminium etching process also contain some small admixtures of sodium thiosulphonate, sodium gluconate and polyalcohols. These components are not a hindrance for waste sodium aluminate application during binder preparation for glass batch pelletizing.

US 3914364 describes a batch pelletizing method based on disc pelletizer application, where premixed batch containing up to 15% of lime fraction of grain size below 0,08 mm (325 mesh), and/or 25% of dolomite fraction of grain size below 0,128 mm (200 mesh) is mixed with water solution of NaOH of 40-73% concentration in amount up to 15% on total batch basis.

US 4026691 describes a batch pelletizing method where the slurry obtained by reaction of NaOH with part of limestone and/or dolomite at 80 -160°C is added to remaining glass batch materials during pelletizing on disc pelletizer.

US 4028131 describes the method of batch preparation suitable for pelletizing, characteristic in mixing of sand with quicklime and/or calcined dolomite with caustic soda with or without alkali metal salts.

US 4031175 describes a process of batch ingredients pelletizing in disc pelletizer using concentrated solution of alkali metal hydroxide as binding agent. The innovation consists in using at least 20% of fine dolomite below 0,25 mm (100 mesh) and 15% of fine limestone below 0,128 mm (200 mesh).

US 4235618 describes a process of borosilicate glass batch pelletizing. In order to minimize the sticky or tacky surface characteristic of free water containing pellets, the fresh pellets are additionally covered with dry batch.

US 4252754 describes a treatment of pellets obtained by using NaOH as binding agent with hot waste gases from a glass melting furnace.

Polish patent PL 111274 describes a pelletizing method of glass batch using 10-30% of glass powder of average size 0,1- 2,5 mm with chemical composition compatible with the batch. As a binding agent, water glass solution in water is used in ratio from 1:2 to 1:5, in 8-15% of volume.

US 4349366 describes a continuous pelletizing process in a drum pelletizer. Green granules containing 4-12 % of water are used as nuclei for new pellets. During the pelletizing process, sand, lime and NaOH are added in sequence.

Methods described in US 3914364***,*** US 4026691***,*** US 4028131 and US 311175 are based on surface solubility of sand grains in sodium hydroxide. Thin films of hydrated silicates, formed as a product, act as binders due to adhesion forces.

In methods described in US 3914364 and US 4031175***,*** a binding effect is additionally forced due to calcium and/or magnesium hydroxide formed *"in-situ"* as a product of sodium hydroxide with lime and/or dolomite. This effect is stronger when using the method described in US 4026691***,*** where the reaction proceeds at an elevated temperature.

EP 1966105 describes the application of the attritor for forced silicate substance activation in order to obtain multifunctional additive lowering density and setting time of the cement containing mixture. This additive could be used as slurry, powder or agglomerate to initiate a hardening process of mixtures with other materials, without the necessity of hydrothermal conditions.

Polish patent application P.408208 presents a method of binder preparation in two-stage geopolymerization of blast furnace fine slag of average grain size below 10 µm in a solution of water glass and sodium aluminate.

The main drawback of pelletizing methods known from former patents is their incompatibility with requirements and conditions of mass glass production, especially container and float. Most significantly, it is impossible to prepare a binder capable of producing a fixing effect to all grains of raw materials in batch for an acceptable price, given the required minimal binding agent concentration, and its cost per unit. The reason for the lack of a cost-effective solution is that, until now, only substances with binding effect based on adhesion forces were proposed. The use of adhesive aggregation of grains imposes the disc pelletizer as the preferred choice. Disc pelletizers have a small efficiency and cause variation in the product's properties resulting from even small changes of procedure parameters.

Glass batch pelletizing methods known from patent literature are primarily based on water glass or sodium hydroxide addition to raw materials during mixer blending. Thin films of viscous liquid are formed on a surface of grains of raw materials, which promote their aggregation during pelletizing process more often performed on disc device. Mixing time rarely exceeds 6 minutes and is too short to give any important progress of chemical reaction between alkali silicate or alkali hydroxide with sand or feldspar grains in the batch. Chemical affinity of batch components to this kind of binding agent promotes only better grains wettability by binding liquid. Consequently, to obtain the aggregating effect based on adhesion forces, addition of 5 to 8 % of water glass is required, making such a pelletizing process unprofitable for glasses mass produced as container or float glasses. In the case of technically important borosilicate E-glass, such a quantity of water glass causes overcrossing of alkali limit in that type of glass. Batches for soda-lime glasses contain substantial quantities of soda of up to 25%. Soda is a substance with high tendency for hydrate formation, causing high water concentrations of over 10% in batches prepared for pelletizing. Water bound in soda hydrate gives some mechanical strength of green pellets, which is unfortunately lost after their preheating over 35°C. Low mechanical strength complicates and sometimes makes the green pellets unfit for application in preheating installations, the most important way to recover heat of flue gases from the melting furnace. In case of high water amounts used in pellet preparation, a substantial part of flue gas energy is consumed for drying.

A far bigger volume of binding agent could be obtained with the same water glass quantity if, instead of simple introduction into a mixer, the binding agent is applied as alkaline activator of slag or fly ash.

Polish patent application no P.408208 describes a method of preparation of effective binder proceeding in two-step geopolymerization supported by sodium aluminate addition, suitable for glass batch granulation. In this case, the binding agent is not water glass, but the product of its reaction with fine milled granulated blast furnace slag with average grain size below 10 µm or quicklime and sodium aluminate. Binder is added to the rest of batch raw materials excluding soda ash, which is introduced at the end of the mixing process. This method required a long time and a costly additional milling process of commercially available fine slag with typical average grain size below 100 µm. When slag is milled before alkali activation, the heat released in the process is lost, while it could enhance the amount and quality of binding agent. Undissolved slag grains of size about 10 µm do not improve glass melting process over slag grains of size of 100 µm, thus the cost of slag grinding to the smaller diameter of 10 µm is not technologically justifiable. Also, combining the rule described in P 408208 with soda ash addition at the end, after premixing of all other raw materials, unnecessarily extends and complicates the batch preparation procedure. Binding agent based on blast furnace slag is useful for batches dedicated for colour and flint glasses of Fe₂O₃ concentration over 0,04%. The proposal of quicklime or slaked lime application for super white flint glass appears to be too expensive for mass-produced glass.

This invention is aimed at the preparation of a universal method of glass batch pelletizing suitable for any glass factory that uses own or external cullet.

The object of the invention is a method of glass batch pelletizing with binding agent obtained as a product of cullet activation, proceeding in two steps:
1. Partial dissolution of amorphous or partially amorphous aluminosilicate precursor in a form of glass cullet of chemical composition in wt. %: from 50 to 100 the sum: SiO₂ + Al₂O₃ + B₂O₃ + TiO₂ from 0 to 30 the sum: Na₂O+ K₂O + Li₂O, from 0 to 30 the sum: CaO + MgO + BaO + PbO + ZnO + SrO or slag of chemical composition in wt. %: from 30 to 45 SiO₂, from 30 to 50 CaO, from 5 to 20 Al₂O₃, from 5 to 20 MgO, from 0 to 5 Na₂O, from 0 to 5 K₂O, from 0 to 2 SO₃, from 0 to 3 Fe₂O₃ and from 0 to 3 TiO₂ or fly ash of chemical composition in wt. %: from 10 to 90 SiO₂, from 2 to 50 CaO, from 0 to 10 MgO, from 1,5 to 30 Al₂O₃, from 0 to 10 P₂O₅, from 0 to 5 Na₂O, from 0 to 5 K₂O, from 0 to 20 SO₃, from 0 to 10 Fe₂O₃ and from 0 to 5 TiO₂ or their mixture in solution of hydrated silicate of sodium and/or potassium in a manner where at least one of the three conditions is fulfilled: 1) continuous increase of the surface of the reaction, 2) temperature rise of the reaction and 3) removing of a product layer from a surface of precursor grains, that means by alkali activation boosted mechanically and/or thermally.
2. Forced substitution part of the [SiOₙ(OH)₍₄₋ₙ₎]ⁿ⁻ groups in monomers or oligomers of calcium and or magnesium and sodium and or potassium silicates and aluminosilicates by [AlOₙ(OH)₍₄₋ₙ₎]⁽ⁿ⁺¹⁾⁻ ···(n+1)Na⁺ groups from sodium aluminate solution and polycondensation of obtained monomers and oligomers of hydrated aluminosilicates of calcium and/or magnesium and sodium and/or potassium.

The binding agent obtained according to the above method is mixed with the rest of glass batch components and after that, a pelletizing is undertaken without any delay, while continuously proceeding polycondensation of hydrated aluminosilcate gives required mechanical strength and thermal resistance of obtained pellets. Due to these properties, pelletized batch is suitable for transportation, storage, and preheating with hot flue gases from a glass-melting tank.

The procedure of alkali activation according to the present invention utilizes a dualism of function that cullet and slag could play in pelletized glass batch. Firstly, they could be ordinary raw material bearing oxides such as SiO₂, Al₂O₃, CaO, MgO, Na₂O and K₂O to glass. In the second function, they could be amorphous or partly amorphous aluminosilicate precursors of binding agent. Cullet in the first role should preferably be sized from 3 to 50 mm and slag sized from 0,1 to 1 mm. Fly ashes are rather rarely used as a glass batch component, but by definition their size is below 100 µm.

If we consider the binding agent preparation process, three properties of cullet, slag and fly ash, or their mixture, are important: availability of the required binder quantity based on highest limits of cullet, slag or fly ash in the specific glass batch, suitable chemical and phase composition of products after dissolution in water glass, and time required to achieve binder enable to compact whole batch grains during the mixing and pelletizing operation.

Cullet and/or slag and/or fly ash used as binding agent precursor should be characterized by an appropriate grain size distribution, wherein the upper limit for cullet is 3 mm, for slag 1 mm, and for fly ash 0,1 mm. The best choice is, of course, to use commercially available products. Considering granulated blast furnace slag, there are raw materials available on the market matching glass melting process requirements. In the case of own cullet, the fraction passing through a 3 mm sieve is the preferred choice for a binding agent precursor. The use of very fine precursors, cullet and/or slag and/or fly ash of grain size below 100 µm guarantees that all three above-described criteria could be fulfilled. However, even such very fine grains do not dissolve completely after the rather short time used for precursor activation during binding agent preparation. Undissolved grains of cullet and/or slag and/or fly ash form a pellet microstructure in a similar way to that by the rest of batch raw materials such as sand, feldspar, limestone, dolomite. In this case, there is no technological justification to pay a higher price or extra milling cost for fine granulation. A different option is more favourable: if the batch accepts a bigger amount of cullet and/or slag, then a suitable volume of binding agent could be obtained in a reasonable time by combining alkali activation with wet grinding. Additionally, heat released during grinding accelerates the alkali activation process. Also important are the removal of the reaction product and the exposition of the grains' fresh surface to alkali attack. When grinding and activation are undertaken separately, the heat produced during milling is lost.

When alkali activation is combined with wet grinding, coarser cullet and/or slag could be used. In the case of slag, commercially available products with granulation up to 1 mm could be used. In the case of cullet, the most appropriate is to use the fraction below 3mm that causes melting problems, although coarser fraction is also useful. Cullet fraction below 3 mm could be separated by screening own or external cullet. Cullet grains smaller than 3 mm and/or slag grains smaller than 1 mm and ash grains smaller than 0,1, which remained undissolved after alkali activation of the portion of binding agent, are added to the rest of raw materials in a mixer and are a useful component of pellets. Stability of binder composition is controlled by density and pH index measurements and data comparison with standard values for the selected batch. When composition of a precursor changes, the activation time could be accordingly extended or shortened to obtain set values of density and pH.

The method of preparing binding agent based on fast geopolymerization of sols of hydrated aluminosilicates obtained by alkali activation of soda-lime glass cullet solves the problem of application of this approach to flint glass, among them, extra white flint, where use of slag is substantially restricted.

According to the invention, partial dissolution of aluminosilicate precursor is carried out in solution of hydrated sodium and/or potassium silicates of SiO₂/R₂O module from 1,6 to 3,6 where R = Na or K, taken in amount corresponding to 1-10 wt. % of SiO₂+R₂O sum introduced by those hydrated silicates to total mass of entire batch components. Sodium and/or potassium silicates used for partial dissolution of aluminosilicate precursor prior to application are diluted with water in the amount of 5 - 25% of total mass of entire batch components.

According to the invention, single or multicomponent aluminosilicate precursor is introduced into a wet milling device, such as ball mill or attritor, equipped with pan and balls made from material resistant to alkaline corrosion, and subjected to activation mechanically and thermally boosted for 5 to 180 minutes. The use of coarse cullet as a grinding medium is preferable. In this approach, after finishing the grinding/activation process, the slurry is screened on a 3 mm sieve in order to separate binding agent from grinding medium.

A second step of binding agent preparation according to the invention is forced partial substitution of [SiOₙ(OH)(₄₋ₙ)]ⁿ⁻ groups in hydrated silicates and aluminosilicates of calcium and/or magnesium and/or sodium and or potassium by [AlOₙ(OH)₍₄₋ₙ₎]⁽ⁿ⁺¹⁾⁻ ···(n+1)Na⁺ groups coming from sodium aluminate solution of Al₂O₃/Na₂O module from 0,5 to 1,0 and concentration of oxide Al₂O₃+Na₂O sum from 5 to 50%, taken in the amount corresponding to the ratio of Al from sodium aluminate to Si from sodium and/or potassium silicate from 0,05 to 1.

A polycondensation of obtained hydrated aluminosilicates of calcium and/or magnesium, sodium and/or potassium is carried out by additional stirring of the slurry for 1 to 30 minutes.

The starting quantity of cullet or mixture of cullet with slag and/or fly ash is selected according to the rate of precursor dissolution progress measured by concentration of calcium and/or magnesium and/or sodium and/or potassium silicates and alumininosilicates monomers and oligomers. Only the volume and composition of binder are important when considering the relation of binding agent with pelletizing process efficiency. Precursor's grain size at the beginning and end of the process is of negligible importance, as even presence of cullet and/or slag and/or fly ash grains of starting dimension, meaning respectively 3, 1 and 0,1 mm, is not a problem because they are useful batch components, additionally functioning as nuclei of aggregated pellets. The only important criteria is the concentration of calcium and/or magnesium and/or sodium and/or potassium silicates and alumininosilicates monomers and oligomers obtained at the end of cullet and/or slag and/or ash dissolution, which after addition of sodium aluminate give a sufficient amount of binding agent to aggregate all raw materials into pellets. The use of sodium aluminate is crucial for obtaining binding agent prone to polycondensation based on a formation of Al-O-Si bonds within a reasonable timeframe.

Obtained binder is mixed with all raw materials comprising batch for 1 to 10 minutes and transferred without any delay to a pelletizing device of any construction, preferably drum or centrifugal.

The use of cullet as a precursor of binding agent and its wet grinding in water glass solution as a preparation method enables the application of water glass of higher module value than when the binder is obtained as a result of stirring of finely ground slag with water glass and sodium aluminate. The upper limit could be shifted from 2,6 to 3,6. Products of cullet dissolution act as an additional source of alkali, consequently the conditions required for forming the hydrated polyaluminosilicates of calcium and/or magnesium and sodium and/or potassium with water glass of modules from 2,5 to 3,6 are provided. It is important for two reasons: 1) water glass of module 3,6 is two times cheaper than water glass of module 1,7 and 2) water glass of higher module are more safe during handling due to a lower pH value. An aluminium deficit in cullet and slag of specific origin, important for polycondensation rate, is compensated by the addition of sodium aluminate.

The method disclosed in this invention also provides the solution for a cheap, effective binding agent suitable for pelletizing batches for glass of high transparency. In case of such glasses, own cullet is used as a binder precursor. For other flint glasses, where the iron concentration limit is not so strictly defined, the finest fraction of recycled cullet and slag, or their mixture, are sources at disposal. The finest fraction of cullet, being a source of undesirable foam on glass melt surface in the charging area, is difficult for reuse in the melting technology currently used.

Procedure of binding agent preparation during wet grinding of a precursor in alkaline activator has three important advantages: 1) energy requirements are limited to a minimum, 2) heat released during grinding increase amount of binder without extending time of the process and 3) undissolved precursor's grains, in case of cullet below 3 mm and in case of slag below 1 mm, are used as pellet nuclei, additionally increasing their mechanical strength. Grinding parameters are optimised every time according to the precursor characteristic and expected precursor's volume and composition. For example, when cullet is also used as a grinding medium and part of it is in a form of pieces bigger than 3 mm, mill is discharged through a 3 mm screen and filled with next portions of cullet, water, water glass and sodium aluminate. The stability of binding agent composition is checked by density and pH index measurements.

Optimal pellets granulation depends on the kind of glass and the method of charging batch to a furnace. When pellets must be preheated with flue gases, their size distribution should guarantee highest heat transfer and smallest flue gas pressure drop between inlet and outlet simultaneously. Although values of effective heat conductivity of pellets are 10 times higher at 250°C and 4,5 times higher at 500°C than for loose dusty batch, they are still twice lower than for cullet. For this reason, to assure uniform pellet preheating without a pressure drop, the biggest ones should not cross the 12 mm diameter limit. To minimise danger of dust carryover with flue gases, smallest pellets should be over 2 mm.

When cold batch is charged to melting furnace, the pellets' grain distribution should make them resistant to carryover from flame velocity and pressure changes inside the furnace combustion space. The lowest limit for this case is 1,6 mm. The highest limit is defined by temperature equalization rate in batch layer in batch charging area. Because it is advantageous to keep the same step of chemical reaction across whole batch layer height, the dominant grain size fraction of pellets should be kept in 4 to 10 mm range. Such granulation also gives conditions promoting easy CO₂ release from the MgCO₃ part of dolomite and in some extends also from CaCO₃ before the first liquid appears. Depletion of glass melt in dissolved gas and bubbles gives conditions for shortening a fining time and lowering hot spot temperature in the furnace.

Although mechanical strength of pellets containing small cullet grains is higher than pellets formed only by mineral raw materials, it is advantageous to cool down the green pellets below 35,4°C, that is, below temperature of Na₂CO₃·H₂O formation just after finishing the granulation. As the polycondensation process of aluminosilicate binder proceeds continuously during pellet transportation and storage, the process is of major importance for pellets mechanical strength and water release from soda hydrate do not spoil it.

According to the invention it is advantageous to use waste product in the form of sodium aluminate originating from aluminate etching before anodisation.

The core of the presented invention is also the use of own or external cullet or cullet in mixture with blast furnace slag or fly ash, where the first step of alkaline activation is performed in a way that fulfils at least one of the following three conditions: 1) continuous increase of reaction's surface, 2) increased reaction's temperature and 3) continuous removal of product's layer from precursor's grains that means alkali activation is thermally and mechanically boosted, and the second step in a way that fulfils the conditions for forced substitutions of [SiOₙ(OH)₍₄₋ₙ₎]ⁿ⁻ groups in silicates and aluminosilicates of calcium and/or magnesium and sodium and/or potassium with [AlOₙ(OH)₍₄₋ₙ₎]⁽ⁿ⁺¹⁾⁻ ···(n+1)Na⁺ groups from sodium aluminate.

Utilization of hot flue gases from glass melting furnace to batch preheating is an important task for the glass industry and, up to now, it awaits an industrially proven solution. When flue gases are used for preheating cullet alone, its highest temperature could not be over 500°C. Total flue gas energy recovery is possible only when using the regenerative furnace, and where cullet share in batch is at least 60% or higher, which therefore only applies to coloured container glass. The entire flue gas energy cannot be retaken in the case of flint glass, due to low cullet ratio in batch and instable operation of preheating installations with low cullet and high loose batch share.

A separate glass category comprises borosilicate glasses, especially E type. Due to hard melting conditions, batches for E glass are composed of finely ground raw materials, typically below 60 µm. In this case, the pelletizing process solves the problem of dust emission during batch transportation, charging and carryover inside the furnace, which is the main source of refractory corrosion in the furnace superstructure.

The invention solves a few important problems related to glass melting and simultaneously proposes the use of two waste materials which, until now, had no important industrial application: finest fraction of cullet, and waste sodium aluminate from aluminium etching before anodisation. Moreover, the invention solves a few important issues related to the glass melting process. Using batches pelletized according to the method in the invention allows the decrease of dust emission to the atmosphere during transportation, charging and melting, faster reactions rates, and improved glass quality. In pelletized batches used for melting, important drawbacks of loose batches are eliminated: segregation tendency and long lasting fining process. These advantages give rise to three opportunities for the furnace operator: 1) decrease of energy consumption with the same glass output, 2) decrease of hot spot temperature with the same glass output and 3) output increase with the same energy consumption. Batches prepared according to this invention are ready for preheating with flue gases from the melting furnace.

The glass batch pelletizing method using activated cullet are presented in the following examples, the disclosure of which does not exclude implementation of the method described in this invention for other applications compatible with the invention.

### Example 1.

### Batch for flint container glass:

75 g cullet of flint soda-lime container glass of composition in wt. %: 71,95 SiO₂, 13,4 Na₂O, 10,3 CaO, 1,9 Al₂O₃, 1,6 MgO, 0,6 K₂O, 0,25 SO₃, 0,03 Fe₂O₃ and 0,02 TiO₂ and grain size below 3 mm was added to 134 g of water and 40,3 g of water glass of module SiO₂/Na₂O = 1,7 and concentration in wt. %: 28,23 SiO₂ and 17,44 Na₂O. The entire mixture was next wet ground in an attritor type mill for 25 minutes. After finishing this operation, a slurry was screened on 3 mm sieve and 4.2 g of waste sodium aluminate of concentration in wt. %: 18,0 Al₂O₃ and 18,6 Na₂O was added and then slurry was stirred for the next 15 minutes. Obtained binding agent was added to a premixed for 30 s flint glass batch of composition in g for 1000 g of glass: sand - 633, soda - 210, limestone -132, dolomite - 69, feldspar - 65 and anhydrite - 5. Whole batch with binding agent was intensively mixed for 5.5 minutes with turbine speed 1250 rpm. The well-mixed batch was introduced into drum pelletizer rotating at 6 rpm. Grain size distribution of pellets obtained as a result in wt. % was: 35.2% >10 mm; 44,3%: 4-10 mm; 19,9%: 2-4 mm; 0,6% <2 mm.

### Example 2.

### Batch for amber container glass:

45 g of fly ash from lignite of composition in wt. %: 35,1 SiO₂, 26,0 Al₂O₃, 18,5 CaO, 5,3 Fe₂O₃, 3,3 TiO₂,3,9 SO₃, 2,2 MgO, 1,8 Na₂O and 0,8 K₂O and grain size below 0,1 mm and 55 g of granulated blast furnace slag of composition in wt. %: 36,7 CaO, 36,5 SiO₂, 13,8 MgO, 9,5 Al₂O₃, 0,5 TiO₂, 0,6 MnO, 0,5 K₂O, 0,2 Na₂O, 0,2 Fe₂O₃, 0,75 S²⁻ and 0,2 SO₃ and grain size below 1 mm were added to solution containing 153,4 g of water and 33,4 g of water glass of module SiO₂/Na₂O = 1,7 and concentration in wt. %: 28,23 SiO₂ and 17,44 Na₂O. The entire mixture was wet ground in an attritor type mill for 15 minutes. After finishing this operation a slurry was screened on 3 mm sieve and 3,3 g of waste sodium aluminate of concentration in wt. %: 18,0 Al₂O₃ and 18,6 Na₂O was added and slurry was stirred for the next 15 minutes. Obtained binding agent was added to a premixed for 30 seconds amber glass batch of composition in g for 1000 g of glass: sand - 676, soda - 233, limestone -134 and anhydrite-3.5. The whole batch with binding agent was intensively mixed for 5.5 minutes with turbine speed 1250 rpm. The well-mixed batch was introduced into drum pelletizer rotating at 6 rpm. Grain size distribution of pellets obtained as a result in wt. % was: 30.9% >10 mm; 64.2: 4-10 mm; 4.5: 2-4 mm; 0.4 <2 mm.

### Example 3.

### Batch for E-glass

100 g of waste E-glass of composition in wt. %: 55,05 SiO₂, 12,05 Al₂O₃, 7,6 B₂O₃, 21,5 CaO, 2,0 MgO, 0,15 SrO, 0,8 Na₂O, 0,2 K₂O, 0,2 Fe₂O₃, 0,1 TiO₂, 0,35 SO₃ of average diameter 50 µm and 65 g of granulated blast furnace slag of composition in wt. %: 38,65 SiO₂, 8,41 Al₂O₃, 37,95 CaO, 12,88 MgO, 0,31 Na₂O, 0,64 K₂O, 0,18 Fe₂O₃, 0,95 TiO₂, 0,05 SO₃, 0,76 - S²⁻, 0,46 MnO of grain size below 1 mm were added to a solution containing 173,8 g of water and 41,5 g of water glass of module SiO₂/Na₂O = 3,4 of composition in wt. %: 24,55 and 7,45 Na₂O. The entire mixture was wet ground in attritor type mill for 90 minutes, and after that 8,3 g of waste sodium aluminate of composition in wt. %: 18,0 Al₂O₃ and 18,6 Na₂O was added. The entire mixture was wet ground in attritor type mill for next 30 minutes. Obtained binding agent was added to a premixed for 30 seconds E-glass batch of composition in g for 1000 g: of glass kaolin - 302, colemanite - 200, sand - 278.5, dolomite - 20.5, limestone-173.5, fluorite -13,3 i sulfate - 6,5. The whole batch with binding agent was intensively mixed for 4 minutes with turbine speed 1400 rpm. The well-mixed batch was introduced into centrifugal pelletizer rotating at 150 rpm. Grain size distribution of pellets obtained as a result in wt. % was: 35,2: 8-12 mm; 51,6: 4-8 mm; 13,2: 2-4 mm; 0 <2 mm.

## Claims

1. Glass batch pelletizing method using activated cullet comprising in: 1) addition of binding agent obtained in two step geopolimerization, where a first step consists of partial dissolution of amorphous or partly amorphous aluminosilicate precursor in a form of glass cullet of composition in wt. %: from 50 to 100 of sum: SiO₂ + Al₂O₃ + B₂O₃ + TiO₂ from 0 to 30% of sum: Na₂O + K₂O + Li₂O, from 0 to 30 of sum: CaO + MgO + BaO + PbO + ZnO + SrO or slag of composition in wt. %: from 30 to 45 SiO₂, from 30 to 50 CaO, from 5 to 20 Al₂O₃, from 5 to 20 MgO, from 0 to 5 Na₂O, from 0 to 5 K₂O, from 0 to 2 SO₃, from 0 to 3 Fe₂O₃ and from 0 to 3 TiO₂ or fly ash of composition: from 10 to 90 SiO₂, from 2 to 50 CaO, from 0 to 10 MgO, from 1,5 to 30 Al₂O₃, from 0 to 10 P₂O₅, from 0 to 5 Na₂O, from 0 to 5 K₂O, from 0 to 20 SO₃, from 0 to 10 Fe₂O₃ and from 0 to 5 TiO₂ or their mixture in solution of hydrated silicate of sodium and/or potassium in a manner which guarantees the increase of the reaction's surface and/or increase of the reaction's temperature and/or removal of the reaction's product layer from a surface of precursor's grains, specifically in conditions of alkaline activation boosted mechanically or thermally and where a second step consists in forced substitution of the part of [SiOₙ(OH)₍₄₋ₙ₎]ⁿ⁻ groups in calcium and or magnesium and sodium and/or potassium silicate's and aluminosilicate's monomers and oligomers by [AlOₙ(OH)₍₄₋ₙ₎]⁽ⁿ⁺¹⁾⁻ ···(n+1)Na⁺groups from sodium aluminate and next proceeding polycondensation formed as a product of precursor with water glass and next with sodium aluminate: monomers and oligomers of hydrated alumininosilicates of calcium and/or magnesium and sodium and/or potassium, to 2) premixed composition of whole batch components, and next 3) mixing with prepared binding agent and next 4) pelletizing operation undertaken without any delay performed in pelletizing device, preferably drum or centrifugal, where batch is transferred into pellets without additional water spraying or introducing any extra binding agent.

2. A method according to claim 1 wherein amorphous or partly amorphous aluminosilicate precursor is glass cullet of grain size below 3 mm or granulated blast furnace slag of grain size below 1 mm or fly ash of grain size below 0,1 mm or their mixtures,

3. A method according to claim 1 wherein amorphous or partly amorphous aluminosilicate precursor used for binding agent preparation is taken in amount from 1 to 15 wt. % of total weight of whole glass batch components used in pellets preparation.

4. A method according to claim 1 wherein the partial dissolution of grains of amorphous or partly amorphous aluminosilicate precursor proceeds in a solution of hydrated silicates of sodium and/or potassium of module SiO₂/R₂O, where R = Na or K from 1,6 to 3,6 and starting concentration SiO₂+R₂O is from 35 to 50 wt. % taken in quantity from 1 to 10 wt. % of total weight of whole glass batch components used in pellets preparation.

5. A method according to claim 1 wherein increase of reaction's surface and/or increase of reaction's temperature and/or removal of reaction's product layer from a surface of precursor's grains proceeding during alkaline activation boosted mechanically or thermally is realized by wet grinding, lasting from 1 to 180 minutes, of amorphous or partly amorphous aluminosilicate precursor in water solution of sodium and or potassium silicate, where water amount corresponds to range from 5 to 25 wt. % of total weight of whole glass batch components used in pellets preparation.

6. A method according to claim 1 wherein forced substitution of part of [SiOₙ(OH)₍₄₋ₙ₎]ⁿ⁻ groups in silicates and aluminosilicates of calcium and/or magnesium and sodium and/or potassium [AlOₙ(OH)₍₄₋ₙ₎] ⁽ⁿ⁺¹⁾⁻ ···(n+1)Na⁺ groups from sodium aluminosilicate of Al₂O₃/Na₂O module from 0,1 to 1,0 and sum Al₂O₃+Na₂O concentration from 5 to 50 wt. %, taken in the amount corresponding to atomic ratio of Al from sodium aluminate to Si from sodium and/or potassium silicate from 0,05 to 1.

7. A method according to claims 1 and 6 wherein policondensation of hydrated alumininosilicates of calcium and/or magnesium and sodium and/or potassium obtained at the end of the first step of aluminosilicate precursor's activation is performed by extra stirring lasting from 1 to 30 minutes after sodium aluminate addition.

8. A method according to claim 1 wherein to accelerate fresh strength of green pellets, at the final step of pelletizing the green pellets are cooled down below 34,5°C with cold air.

9. A method according to claim 1 wherein sodium aluminate used in binding agent preparation is a waste product obtained from the etching process of aluminium before its anodization.
